# EUROPÄISCHE PATENTSCHRIFT

(11) **EP 3 814 436 B1**
(45) Veröffentlichungstag und Bekanntmachung des Hinweises auf die Patenterteilung: **27.04.2022**
(21) Anmeldenummer: 19731150.9
(22) Anmeldetag: 08.05.2019
(51) Int. Cl.: C09D 5/32, C09D 7/48, C09D 7/61, E06B 3/30, B05D 1/28, B05D 3/06, B05D 7/00, C08K 3/36, C08K 5/13, E06B 3/48

(54) **BAUELEMENT MIT WITTERUNGSBESTÄNDIGER BESCHICHTUNG UND BESCHICHTUNGSANLAGE**
STRUCTURAL ELEMENT WITH WEATHER-RESISTANT COATING AND COATING INSTALLATION
ÉLÉMENT DE CONSTRUCTION COMPRENANT UN REVÊTEMENT RÉSISTANT AUX INTEMPÉRIES ET INSTALLATION DE REVÊTEMENT

(30) Priorität: 26.06.2018 DE 202018103626 U
(43) Veröffentlichungstag der Anmeldung: 05.05.2021
(73) Patentinhaber: Hörmann KG Brockhagen, 33803 Steinhagen (DE)
(72) Erfinder: BRINKMANN, Michael, 33790 Halle (DE)
(74) Vertreter: Seranski, Klaus
(86) Internationale Anmeldenummer: PCT/EP2019/061759
(87) Internationale Veröffentlichungsnummer: WO 2020/001836

(56) Entgegenhaltungen:
- DE-A1- 19 920 801
- DE-A1-102009 041 860
- DE-A1-102009 044 802
- DE-A1-102013 010 661

## Beschreibung

Die Erfindung betrifft ein Bauelement nach dem Oberbegriff des Patentanspruchs 1.

Bei solchen Bauelementen kann es sich beispielsweise um metallische Bauelemente handeln, wie etwa um Sektionaltorpaneele. Metallische Bauelemente werden regelmäßig im Bereich der Fassaden von Gebäuden eingesetzt. Beispielsweise werden solche Bauelemente bei der Herstellung von Toren, insbesondere Sektionaltoren benutzt, deren äußere Begrenzungsflächen im Schließzustand Witterungseinflüssen ausgesetzt sind. Zum Erhalt eines gefälligen äußeren Erscheinungsbilds muss Sorge dafür getragen werden, dass diese Bauelemente ihre optischen Eigenschaften auch unter Witterungseinflüssen behalten. Zu diesem Zweck werden Bauelemente eingesetzt, welche aus einem Metallblech gefertigt werden, das vor den zum Erhalt der Bauelemente notwendigen Formgebungsvorgängen, einem Lackierer - und Brennvorgang unterzogen wird. Der Lack wird so auf dem metallischen Substrat eingebrannt und erhält auf diese Weise die gewünschte Witterungsbeständigkeit. Das so vorbereitete Metallblech wird anschließend zum Erhalt von Bauelementen, wie etwa Sektionaltorpaneelen, einem Formgebungsvorgang, wie etwa einem Rollformverfahren unterzogen, indem das lackierte Metallblech von einem Vorort (coil) abgezogen wird und kontinuierlich Formgebungswalzen durchläuft. Danach wird das geformte Metallblech gegebenenfalls noch ausgeschäumt und mit anderen Metallblechen zusammengefügt, um so beispielsweise in der EP370376 A beschriebene Sektionaltorpaneele zu erhalten. Der Lackierervorgang muss dabei so ausgeführt werden, dass während des Formgebungsvorgangs keine Beschädigungen der Lackoberfläche erfolgt. Gegebenenfalls ist es auch erforderlich, dass die lackierten Bleche einen Prägevorgang unbeschadet überstehen, welcher dem Formgebungsvorgang vorangeht und mit dem beispielsweise eine "Wood-Grain"-Prägung des Metallblechs erhalten wird.

Bauelemente müssen üblicherweise mit unterschiedlichen Farben und Dekors bereitgestellt werden. Daher müssen unterschiedliche Vorräte an entsprechend vorbehandelten Metallblechen vorgehalten werden. Für einige Gestaltungswünsche ist es auch erforderlich, Folien auf das gegebenenfalls vorbehandelte Metallblech aufzubringen und diese Folien unter Umständen auch noch zum Erhalt der gewünschten Witterungsbeständigkeit mit einer Schutzfolie abzudecken. Das ist beispielsweise der Fall, wenn die metallischen Bauelemente ein Holzdekor erhalten sollen. In diesem Fall wird eine Folie mit Holzdekor auf das metallische Substrat aufgebracht und anschließend eine Acrylatfolie auf die Dekorfolie laminiert. Die Acrylatfolie kann dabei eine Dicke von etwa 50 Mikrometer aufweisen. Auch hier müssen für jedes Dekor entsprechend vorbereitete Metallblechvorräte (coils) vorgehalten werden. Das bringt erhebliche Lagerhaltungskosten mit sich.

Zur Lösung der beschriebenen Lagerhaltungsprobleme wird gemäß der Druckschrift DE 10 2009 041 860 A1 ein Bauelement, das gegebenenfalls bereits mit einer Grundbeschichtung beschichtet ist, nach der Formgebung mithilfe eines Druckkopfes mit einer Farbe und gegebenenfalls zusätzlich mit einer witterungsbeständigen Beschichtung beschichtet. Das Dekor wird also erst dann aufgebracht, wenn der Formgebungsvorgang abgeschlossen ist, sodass die Lagerhaltung insgesamt vereinfacht werden kann.

Es hat sich allerdings herausgestellt, dass die Einflüsse, denen das Bauelement ausgesetzt ist, trotz einer gegebenenfalls aufgebrachten witterungsbeständigen Beschichtung nach einiger Zeit zu Veränderungen und/oder Beschädigungen der unterhalb der Beschichtung liegenden Flächen führen kann/können. In diesen Fällen ist eine Nachbehandlung dieser Flächen jedoch besonders schwierig, da zunächst die witterungsbeständige Beschichtung entfernt und erst anschließend eine Nachbearbeitung der darunterliegenden Flächen, wie etwa einer Farbschicht möglich ist.

Zur Lösung dieser Probleme wird in der DE 10 2013 010 661 A1 ein Bauelement vorgeschlagen, bei dem die witterungsbeständige Beschichtung einen ersten Inhaltsstoff zum Erhöhen der Kratzfestigkeit des Bauelements und einen zweiten Inhaltsstoff zum Verbessern der Farbbeständigkeit des Bauelements enthält.

In der DE 19920801 A1 sind mehrschichtige Klarlackierungen angegeben, die sich mit einer hohen Schichtdicke herstellen lassen.

Beim praktischen Einsatz dieser bekannten Bauelemente hat sich jedoch gezeigt, dass immer noch keine ausreichende Witterungsbeständigkeit erhalten werden kann.

Angesichts dieser Probleme im Stand der Technik liegt der Erfindung die Aufgabe zugrunde, ein Witterungseinflüssen ausgesetztes Bauelement bereitzustellen, mit dem über einen langen Zeitraum eine zufriedenstellende Witterungsbeständigkeit einer auf einer Begrenzungsfläche aufgebrachten Bedruckung erreicht werden kann. Erfindungsgemäß wird diese Aufgabe durch die im kennzeichnenden Teil des Patentanspruchs 1 angegebene Weiterbildung der bekannten Bauelemente gelöst.

Diese Erfindung geht auf die verblüffend einfache Erkenntnis zurück, dass sich die Inhaltsstoffe der in der DE 10 2013 010 661 A1 beschriebenen Beschichtung gegenseitig beeinflussen und so ihre Eigenschaften zumindest teilweise verlieren, was zu den beobachteten Mängeln führt.

Bei den erfindungsgemäßen Bauelementen kann jede einzelne Beschichtungslage im Hinblick auf den damit angestrebten Beschichtungszweck optimiert werden, um so die Produkteigenschaften insgesamt zu verbessern und eine lang anhaltende Witterungsbeständigkeit sicherzustellen.

Erfindungsgemäß weist mindestens eine Beschichtungslage, vorzugsweise eine äußere erste Beschichtungslage einen ersten, die Kratzfestigkeit erhöhenden Inhaltsstoff auf. Weiter ist es im Rahmen der Erfindung vorgesehen, dass mindestens eine Beschichtungslage, vorzugsweise eine zwischen der ersten Beschichtungslage und der äußeren Begrenzungsfläche des Bauelementes bzw. der bedruckten Oberfläche des Bauelementes angeordnete innere zweite Beschichtungslage einen zweiten Inhaltsstoff zum Verbessern der Farbbeständigkeit des Bauelementes aufweist.

Mithin kann bei erfindungsgemäßen Bauelementen mit der äußeren Beschichtungslage die mechanische Beständigkeit des Bauelementes gewährleistet werden, während mit der inneren Beschichtungslage die optischen Eigenschaften des Bauelementes langfristig erhalten werden können.

Im Rahmen der Erfindung ist allerdings auch an den Einsatz von solchen Bauelementen gedacht, bei denen der zweite Inhaltsstoff zum Verbessern der Farbbeständigkeit des Bauelements in der äußeren Beschichtungslage enthalten ist, während der erste, die Kratzfestigkeit erhöhende Inhaltsstoff in der inneren Beschichtungslage enthalten ist. Derartige Ausführungsformen haben sich im Besonderen in solchen Fällen als zweckmäßig erwiesen, bei denen der erste, die Kratzfestigkeit erhöhende Inhaltsstoff nicht UV-beständig ist. In solchen Fällen muss dieser Inhaltsstoff durch die äußere, ggf. weichere UV-Schutzschicht geschützt werden, damit das den optischen Gesamteindruck des Bauelements bestimmende Dekor langfristig vor Kratzern geschützt bleibt. Dabei kann ggf. in Kauf genommen werden, dass die weichere UV-Schutzschicht geringfügige mechanische Beschädigungen erfährt, welche den optischen Gesamteindruck kaum beeinträchtigen, solange das Dekor des Bauelements geschützt bleibt.

Erfindungsgemäß weist der erste Inhaltsstoff eine Siliziumverbindung, wie etwa Kieselsäure und/oder Siliziumdioxid auf, und ist bevorzugt ein Kieselsol (colloidal silica) und/oder eine kieselsäurehaltige Substanz. Diese Verbindungen bzw. Stoffe machen die Beschichtung besonders kratzfest. Der Anteil der Kieselsäure und/oder des Kieselsol an dem ersten Inhaltsstoff beträgt erfindungsgemäß 30-70 Gewichtsprozent, insbesondere etwa 50 Gewichtsprozent, wobei der Rest des ersten Inhaltsstoffs ein (Poly-) Acrylat, insbesondere ein Diacrylat enthalten kann. Bei einer bevorzugten Ausführungsform ist der erste Inhaltsstoff eine colloidale Suspension von amorphem Siliziumdioxid, bevorzugt eine Diacrylatdispersion. Bei einer besonders bevorzugten Ausführungsform weist der erste Inhaltsstoff Colloidal Silica (insbesondere FCS 100) in einer Acrylatmatrix als Bindemittel in Verbindung mit polymerem Acrylat auf. Im Rahmen der Erfindung hat es sich gezeigt, dass zum Erhalt der gewünschten Kratzfestigkeit der Anteil des ersten Inhaltsstoffs an der ersten Beschichtungslage 0,7 bis 22 Gewichtsprozent, insbesondere 3 bis 15 Gewichtsprozent beträgt. Bei mechanisch besonders belasteten Oberflächen kann der Anteil des ersten Inhaltsstoffs in der ersten Beschichtungslage 25 bis 30 Gewichtsprozent betragen.

Für den Erhalt einer guten Farbbeständigkeit ist erfindungsgemäß vorgesehen, dass der zweite Inhaltsstoff einen UV-Absorber, wie etwa ein Resorcinolderivat aufweist. In anderen Worten kann die Beschichtung für Licht im sichtbaren Licht im Wesentlichen transparent sein, während sie UV-Licht, zumindest teilweise, insbesondere vollständig absorbiert. Hierdurch wird die Einstrahlung des aggressiv wirkenden UV-Lichts auf eine unterhalb der zweiten Beschichtungslage liegende Farbschicht oder Metallschicht des Bauelements verringert, was zu einer besseren Farbbeständigkeit dieser darunterliegenden Schichten führt und die Haltbarkeit des Bauelementes erhöht. Insbesondere dauert es länger, bis eine Verblassung oder ein Farbverlust der Farbschicht auftreten. Der Anteil des zweiten Inhaltsstoffs an der zweiten Beschichtungslage beträgt vorzugsweise zwischen 0,5 und 14 Gewichtsprozent, insbesondere 3 bis 10 Gewichtsprozent. Bei besonders starker Sonneneinstrahlung ausgesetzten Bauelementen kann der Anteil des zweiten Inhaltsstoffs an der zweiten Beschichtungslage 15 bis 20 Gewichtsprozent betragen. Mit den vorstehend beschriebenen Maßnahmen können mechanische und optische Eigenschaften des Bauelementes langfristig erhalten werden, wobei durch die Ausführung der witterungsbeständigen Beschichtung mit zwei Beschichtungslagen jede einzelne Beschichtungslage im Hinblick auf den damit angestrebten Zweck optimiert werden kann. Insbesondere ist es im Rahmen der Erfindung möglich, durch Erhöhung des Anteils des die Kratzfestigkeit begünstigenden ersten Inhaltsstoffs in der ersten Beschichtungslage eine bessere Kratzfestigkeit zu erzielen als bei Bauelementen gemäß DE 10 2013 010 661 A1, während durch Erhöhung des Anteils der UV-Absorber in der zweiten Beschichtungslage die Farbbeständigkeit der Bauelemente langfristig verbessert werden kann.

Zusätzlich kann jede der Beschichtungslagen ein oder mehrere Bindemittel, insbesondere (Poly)-Acrylate, wie etwa Triacrylat, aliphatisches Triacrylat, Diacrylat, aliphatisches Diacrylat und/oder aliphatisches Urethandiacrylat aufweisen. Die Beschichtung kann dann durch Bestrahlung, insbesondere durch UV-Bestrahlung ausgehärtet werden. Die Polymerisation wird bevorzugt durch eine UV-Lichtquelle bewirkt. Bei einer bevorzugten Ausführungsform der Erfindung weist mindestens eine Beschichtungslage der Beschichtung zwei oder mehr verschiedene Bindemittel, nämlich ein aliphatisches multifunktionales Acrylat, ein Triacrylat, vorzugsweise ein aliphatisches Urethandiacrylat und/oder vorzugsweise ein Diacrylat auf.

Alternativ oder zusätzlich kann mindestens eine Beschichtungslage ein Lackverlaufmittel aufweisen, dessen Anteil an der Beschichtungslage vorzugsweise 0,02 bis 5 Gewichtsprozent beträgt. Alternativ oder zusätzlich kann mindestens eine Beschichtungslage einen Lichtstabilisator aufweisen. Der Lichtstabilisator kann zusätzlich dazu dienen, einen Oxidationsschutz zu gewährleisten. Der Lichtstabilisator kann einen UV-Absorber, wie etwa Tinuvin^{®} sein, der schädliches UV-Licht herausfiltert und damit die Verfärbung des Beschichtungslacks und/oder einer darunter befindlichen Schicht verhindert. Der Lichtstabilisator kann ein Amin, insbesondere ein sterisch gehindertes Amin (hindered amin light stabilizer, HALS) aufweisen, durch das freie Radikale neutralisiert werden, sodass Oberflächeneigenschaften, wie Glanz, beibehalten werden können, und eine Rissbildung oder ein Abkreiden von Farben verhindert wird. Der Anteil des Lichtstabilisators an der Beschichtungslage beträgt bevorzugt 0,1 bis 2 Gewichtsprozent. Alternativ oder zusätzlich kann mindestens eine Beschichtungslage einen oder mehrere Fotoinitiatoren zum Auslösen und/oder beschleunigen eines Polymerisationsprozesses, wie etwa Irgacure^{®}, Genocure^{®}, Lucirin^{®} und/oder Esacure^{®} aufweisen. Diese Stoffe können den Polymerisationsprozess auslösen und schnell zu einem vernetzten Endprodukt führen. Eine UV-Härtung wird damit beschleunigt, sodass Zeit und Energie eingespart werden können.

Alternativ oder zusätzlich kann mindestens eine Beschichtungslage einen Inhaltsstoff zum Erhalt einer Mattierung der Beschichtung, wie etwa ein Acrylpolymer, insbesondere ein Acrylatestherpolymerisat aufweisen. Damit kann das äußere Erscheinungsbild des Bauelementes je nach Wunsch matt oder glänzend gestaltet werden. Zweckmäßigerweise beträgt der Anteil an der ersten Beschichtungslage 1,2 bis 23 Gewichtsprozent. Die Beigabe eines Inhaltsstoffs zur Mattierung der Beschichtung ist besonders in Fällen wichtig, in denen das Bauelement eine Farbschicht unterhalb der Beschichtung aufweist. Durch die Mattierung werden nämlich eine Richtlichtreflexion bzw. ein Glanz der Beschichtung unter Lichteinstrahlung verringert oder unterbunden, sodass die darunter angeordnete Farbschicht, die beispielsweise Bilder und/oder Motive aufweisen kann, besser und klarer von außen erkennbar wird.

Die gewünschten Eigenschaften der einzelnen Beschichtungslagen können im Rahmen der Erfindung mit besonderem Vorteil erhalten werden, wenn die witterungsbeständige Beschichtung mit einer Gesamtschichtdicke von mehr als 2 µm und vorzugsweise weniger als 20 µm, bevorzugt mehr als 5 µm und vorzugsweise weniger als 15 µm, insbesondere mehr als 8 µm und vorzugsweise weniger als 10 µm aufgetragen wird, wobei vorzugsweise jede Beschichtungslage eine Lagendicke von 2 µm oder mehr aufweist.

Das erfindungsgemäße Bauelement ist insbesondere ein metallisches Bauelement, wie etwa ein Sektionaltorpaneel, eine Rolltorlamelle oder dergleichen.

Die oben beschriebenen Oberflächeneigenschaften der Kratzfestigkeit und Farbbeständigkeit sind bei erfindungsgemäßen Bauelementen besonders wichtig, bei denen eine Fläche des Bauelementes mit einer Farbe bedruckt ist und die bedruckte Fläche mit der witterungsbeständigen Beschichtung beschichtet ist, wodurch die Farbschicht geschützt werden soll. Die Eigenschaften der unter der Beschichtung angeordneten Farbschicht, das Verfahren zu deren Auftragen sowie eine Vorrichtung zum Auftragen der Farbschicht sind in der oben bereits genannten Druckschrift DE 10 2009 041 860 A1 und der EP 2656923 A2 erläutert. Der Offenbarungsgehalt dieser Schriften in Hinblick auf diese Merkmale wird vollständig durch Verweis in die vorliegende Beschreibung aufgenommen. Selbstverständlich kann die Farbschicht eines erfindungsgemäßen Bauelements auch durch einen üblichen Lackiervorgang aufgebracht werden. In diesem Fall kann die Dicke der Farbschicht insgesamt bis zu 100 µm betragen. Es können auch Mehrschichtlackierungen mit zwei, drei, vier, fünf oder mehr Schichten, wie aus der Automobiltechnik bekannt, zum Einsatz kommen. Bei Einsatz von Druckverfahren zum Aufbringen der Farbschicht weist die Farbschicht eine Schichtdicke mit insgesamt 15 µm oder weniger, vorzugsweise 10 µm oder weniger, insbesondere 5 µm oder weniger auf, weil auf diese Weise Material eingespart werden kann. Insgesamt kann die Gesamtdicke von Farbe und witterungsbeständiger Beschichtung 30 µm oder weniger betragen.

Alternativ oder zusätzlich ist eine Fläche des Bauelementes mit einer Grundbeschichtung beschichtet, wobei die mit der Grundbeschichtung beschichtete Fläche mit der Farbe bedruckt und anschließend mit der witterungsbeständigen Beschichtung beschichtet sein kann.

Im Besonderen bei sogenannten Sandwichbauelementen, bei denen ein wärmeisolierender Kern zwischen zwei Metallschalen aufgenommen ist, hat es sich als problematisch erwiesen, wenn eine dunkel eingefärbte äußere Begrenzungsfläche des Bauelementes Sonneneinstrahlung ausgesetzt wird und sich dadurch aufwärmt, weil durch die Temperaturdifferenz zwischen äußerer Begrenzungsfläche und innerer Begrenzungsfläche thermische Spannungen in dem Bauelement erzeugt werden, welche zu Verbiegungen des Bauelementes führen können. Dieser Effekt kann reduziert werden, wenn die Grundbeschichtung, die Farbe und/oder die witterungsbeständige Beschichtung Pigmente mit einer besonders hohen Reflektivität im Wellenlängenbereich oberhalb von 750 nm aufweist, weil dann ein großer Teil der ansonsten absorbierten und zur Aufheizung der Bauelemente führenden Wärmestrahlung im Sonnenspektrum nicht absorbiert, sondern ohne Aufwärmungseffekt reflektiert wird. Beim Einsatz entsprechender Cool-Color-Pigmente hat es sich als besonders zweckmäßig erwiesen, wenn die mittlere Reflektivität (Verhältnis reflektierter Intensität zu eingestrahlter Intensität) der beschichteten Bauelementoberfläche für elektromagnetische Wellen im Wellenlängenbereich von 750 nm bis 2500 nm bei einem ein Einstrahlwinkel von 45° 0,1 oder mehr beträgt, vorzugsweise 0,2 oder mehr, insbesondere 0,25 oder mehr beträgt. Die Cool-Color-Pigmente sind im Rahmen der Erfindung besonders bevorzugt in der ersten Beschichtungslage aufgenommen, sodass bereits eine Aufwärmung dieser ersten Beschichtungslage reduziert wird. In diesem Zusammenhang hat sich auch gezeigt, dass die Cool-Color-Pigmente die gewünschten Eigenschaften (Kratzfestigkeit) des ersten Inhaltsstoffs kaum beeinflussen. Im Gegensatz dazu kann allerdings eine Anpassung der gewünschten Eigenschaften des Zweitinhaltsstoffs (Erhöhung der Farbbeständigkeit) durch Cool-Color-Pigmente in Mitleidenschaft gezogen werden.

Die genannten Cool-Color-Pigmente kommen mit besonderem Vorteil zum Einsatz, wenn das Bauelement zwischen der bedruckten Oberfläche und einer dieser entgegengesetzten Begrenzungsfläche ein Material geringer Wärmeleitfähigkeit, wie PU-Schaum aufweist. Ein aus erfindungsgemäßen Bauelementen hergestelltes Sektionaltorblatt weist eine Mehrzahl von bezüglich vorgegebenen Gelenksachsen gelenkig miteinander verbundenen Bauelementen auf, wobei die Form der Bauelemente in einer senkrecht zu den Gelenksachsen verlaufenden Schnittebene der Form der in der EP 370 76 A beschriebenen Sektionaltorpaneele entsprechen kann.

Im Rahmen der Erfindung wird ein Bauelement vorzugsweise hergestellt durch ein Verfahren, bei dem das gegebenenfalls bereits mit einer Grundbeschichtung und/oder einer Farbe bedruckte Bauelement mithilfe einer mindestens zwei Beschichtungswalzen aufweisenden Beschichtungseinrichtung beschichtet wird. Dazu kann ein Metallband in einem kontinuierlichen Vorgang von einem Vorrat (coil) abgezogen, einer Bearbeitung, wie etwa Formgebung unterzogen und danach bedruckt, beschichtet und gegebenenfalls auf vorgegebenen Längen geschnitten werden. Das Bedrucken erfindungsgemäßer Bauelemente erfolgt vorzugsweise mithilfe einer Druckeinrichtung nach Art eines Tintenstrahldruckers, wobei zum Zweck des Bedruckens eine Relativbewegung zwischen dem Bauelement und dem Tintenstrahldrucker erzeugt wird.

Im Rahmen der Erfindung können zum Bedrucken sowohl sogenannte Single-Pass-Verfahren zum Einsatz kommen, bei denen jedes einzelne Oberflächensegment der zu beschichteten Begrenzungsfläche des Bauelementes nur einmal die Druckvorrichtung passiert. Bei einer besonders bevorzugten Ausführungsform der Erfindung kommt allerdings ein sogenanntes Multi-Pass-Verfahren zum Einsatz, bei dem mindestens einige Segmente der zu bedruckenden Begrenzungsfläche des Bauelementes die Druckeinrichtung mehrfach passiert und so mehrfach bedruckt werden, indem vorzugsweise Farbtröpfchen durch Düsen eines Tintenstrahldruckers auf die entsprechenden Begrenzungsflächensegmente aufgebracht werden. Dabei kann das Bauelement während des Druckvorgangs feststehend gehalten werden, während die Druckeinrichtung hin und her gehend bewegt wird. Alternativ ist auch an solche Verfahren gedacht, bei denen bei feststehender Druckeinrichtung das Bauelement bewegt wird. Schließlich ist auch an eine Kombination gedacht, bei der sowohl das Bauelement als auch die Druckeinrichtung zum Zweck des Bedruckens bewegt werden.

Wie der vorstehenden Erläuterung bereits zu entnehmen ist, ist ein erfindungsgemäßes Bauelement auch dadurch gekennzeichnet, dass es hergestellt wird durch Beschichten eines gegebenenfalls bereits mit der Grundbeschichtung und/oder Farbe und/oder einem Dekor versehenen, insbesondere bedruckten Bauelementes mithilfe einer Beschichtungsanlage mit den einzelnen Lagen der witterungsbeständigen Beschichtung, wobei die einzelnen Beschichtungslagen mit drehbar gelagerten Beschichtungswalzen der Beschichtungsanlage nacheinander aufgetragen werden. Dazu kann eine Relativbewegung zwischen der äußeren Begrenzungsfläche des Bauelementes und der Beschichtungsanlage erzeugt werden. Ein erfindungsgemäßes Bauelement kann auch dadurch gekennzeichnet sein, dass es hergestellt ist, indem ein Metallband in einem kontinuierlichen Vorgang von einem Vorrat (Coil) abgezogen, einer Bearbeitung, wie etwa Formgebung unterzogen und danach bedruckt, beschichtet und gegebenenfalls auf vorgegebene Längen geschnitten wird.

Die Erfindung betrifft ferner ein Sektionaltorblatt mit einem erfindungsgemäßen Bauelement sowie ein Sektionaltor mit einem solchen Sektinaltorblatt.

Bei einem erfindungsgemäßen Sektionaltor ist das Sektionaltorblatt zwischen einer im Wesentlichen in einer Vertikalebene ausgerichteten Schließstellung und einer im Wesentlichen in einer Horizontalebene ausgerichteten Öffnungsstellung bewegbar. Dazu weist das Sektionaltor zusätzlich zu dem Sektionaltorblatt Führungsschienen mit einem ersten etwa in Schwererichtung und geradlinig verlaufenden Abschnitt zur Bestimmung der Schließstellung, einem zweiten, etwa in horizontaler Richtung und etwa geradlinig verlaufenden Abschnitt zur Bestimmung der Öffnungsstellung und einem den horizontal verlaufenden Abschnitt mit dem vertikal verlaufenden Abschnitt verbindenden bogenförmigen Abschnitt auf. Zusätzlich kann das Sektionaltor auch noch eine das Sektionaltorblatt in der Schließstellung einfassende Zarge umfassen, wobei in das Sektionaltorblatt gegebenenfalls auch noch eine Schlupftür integriert sein kann.

Der Druckvorgang zum Bedrucken des anschließend zu beschichtenden Bauelementes kann computergesteuert auf Grundlage von digitalen Bilddaten erfolgen. Daher können mit dem Verfahren beliebige auch kundenspezifische äußere Erscheinungsbilder der Bauelemente erhalten werden. Es können auch vom Kunden bereitgestellte Bilddaten, wie etwa JPEG-Dateien verwendet werden. Dabei kann der Druck am Ende einer Produktionsstraße zum kontinuierlichen Produzieren von Bauelementen nach der Formgebung und gegebenenfalls Aufschäumen der Bauelemente aber noch vor dem Beschichten mit der witterungsbeständigen Beschichtung und/oder vor dem Schneiden der Bauelemente auf die gewünschte Länge erfolgen.

Bei einer bevorzugten Ausführungsform erfolgt das Bedrucken der Bauelementoberfläche mithilfe einer Druckeinrichtung nach Art eines Tintenstrahldruckers, wobei eine Relativbewegung zwischen der zu bedruckenden Oberfläche des Bauelementes und einem Druckkopf erzeugt wird, in deren Verlauf gegebenenfalls zunächst mindestens eine zum Aufsprühen einer Farbe auf die Bauelementoberfläche ausgelegte Farbdüse des Druckkopfes die zu bedruckende Oberfläche passiert, wobei, wie vorstehend erläutert, sowohl ein Single-Pass- als auch ein Multi-Pass-Verfahren zum Einsatz kommen kann. Auf diese Weise können beispielsweise unter Einsatz eines einfachen Druckkopfs bei Verwendung von Metallblechen mit der üblichen weißen Einbrennlackierung als Ausgangsmaterial beliebige Schwarzweiß-Motive auf den Bauelementoberflächen erzeugt werden. Es kommt dann also nur schwarze Farbe zum Einsatz. Zum Erhalt farbiger Darstellungen auf den Bauelementoberflächen hat es sich als günstig erwiesen, wenn im Verlauf der Relativbewegung zwei, drei oder mehr Farbdüsen des Druckkopfes nacheinander die zu bedruckende Oberfläche gegebenenfalls mehrfach passieren. Durch entsprechende Einstellung und gegebenenfalls computergestützte Ansteuerung der Farbdüsen können so Motive beliebiger Form und Farbe auf den Bauelementoberflächen erzeugt werden. Dabei können, wie bei herkömmlichen Tintenstrahldruckern, die drei Grundfarben Cyan, Magenta und Gelb zum Erhalt beliebiger Farben im Wege der subtraktiven Farbmischung zum Einsatz kommen.

Als Farben für den Druckvorgang können insbesondere UV-härtbare Farben verwendet werden. Diese Farben werden unmittelbar nach Aufsprühen bzw. Auftragen in einem Strahlungshärtungsprozess unter Bestrahlung mit UV-Strahlung ausgehärtet. Bei dieser chemischen Härtung wird die zunächst flüssige oder niedrigviskose Farbe durch Vernetzen bzw. Polymerisierung in einem irreversiblen Vorgang fest. Dieser Härtungsvorgang kann bei ausreichend intensiver UV-Bestrahlung innerhalb von Bruchteilen einer Sekunde abgeschlossen sein. Hierzu umfasst der Druckkopf vorzugsweise eine Vorrichtung zur Bereitstellung der UV-Strahlung, sodass eine Aushärtung der Farbe unmittelbar nach dem Aufsprühen derselben erfolgen kann. Aufgrund der schnellen Aushärtung kann die Druckgeschwindigkeit und damit die Durchlaufgeschwindigkeit der Bauteile erhöht werden. Des Weiteren ist es möglich, unmittelbar anschließend an die UV-Aushärtung der Farbe die witterungsbeständige Beschichtung aufzutragen.

Nach dem Druckvorgang kann das dadurch erhaltene äußere Erscheinungsbild des Bauelementes konserviert werden, wenn die witterungsbeständige Beschichtung auf die bedruckte Oberfläche aufgebracht wird. Dabei kann zum Aufbringen der witterungsbeständigen Beschichtung eine Relativbewegung zwischen der bedruckten Oberfläche und der Beschichtungsanlage erzeugt werden. Üblicherweise wird im Verlauf des Druckvorgangs eine hin und her gehende Bewegung der Farbdüsen erzeugt, wobei die zu beschichtete Oberfläche dabei in einer senkrecht zur Bewegungsrichtung der Farbdüsen verlaufenden Richtung bezüglich der Düsen gefördert wird.

Es hat sich gezeigt, dass bei Herstellungsverfahren für herkömmliche Sektionaltorpaneele mit einer Breite von 400 mm oder mehr quer zur Produktionsrichtung eine Produktionsgeschwindigkeit von 10 m/min oder mehr, vorzugsweise 15 m/min oder mehr, insbesondere 20 m/min oder mehr erhalten werden kann, wenn die Bauelemente zum Bedrucken mindestens eine einen Druckkopf aufweisende Druckeinrichtung mit einer entsprechenden Durchlaufgeschwindigkeit durchlaufen. Zur Erhöhung der Produktionsgeschwindigkeit können zwei, drei oder mehr in einer quer zur Durchlaufrichtung verlaufenden Druckrichtung nebeneinander angeordnete Druckköpfe vorgesehen sein, sodass von jedem Druckkopf nur ein schmaler Oberflächenbereich beschichtet werden muss. Auch bei Einsatz entsprechender Druckkopfanordnungen kann das Bedrucken im Multi-Pass-Verfahren erfolgen.

Nach dem Bedrucken der Begrenzungsfläche muss die witterungsbeständige Beschichtung aufgetragen werden. Eine entsprechende Beschichtungsanlage zum Herstellen eines Bauelements weist erfindungsgemäß zwei drehbar gelagerte Beschichtungswalzen zum Beschichtung einer gegebenenfalls bereits bedruckten äußeren Begrenzungsfläche des Bauelements auf. Dabei kann eine Beschichtungsfläche mindestens einer Beschichtungswalze, d. h. eine äußere Begrenzungsfläche der drehbar gelagerten Beschichtungswalze eine Härte von 70 Shore D oder weniger und/oder 10 Shore A oder mehr aufweisen. Die Schichtdicke der die Beschichtungsfläche bildenden Mantellage der Beschichtungswalze beträgt vorzugsweise 5 mm oder mehr, insbesondere 10 mm oder mehr, sodass durch die nachgiebige Mantellage Oberflächenprofilierungen der zu beschichtenden Begrenzungsfläche nachgebildet werden können. Zum Erhalt einer zufriedenstellenden Formstabilität weist die Mantellage vorzugsweise eine Dicke von 100 mm oder weniger, insbesondere 50 mm oder weniger auf.

Im Rahmen der Erfindung ist auch an den Einsatz von Beschichtungswalzen gedacht, der Beschichtungsflächen entsprechend einer Oberflächenprofilierung der zu beschichtenden Begrenzungsfläche profiliert sind.

Zum Erhalt einer witterungsbeständigen Beschichtung gleichbleibender Beschichtungsstärke ist auch daran gedacht, mindestens einer Beschichtungswalze eine Ausgleichswalze zum Ausgleichen von Beschichtungsdickenabweichungen zuzuordnen.

In der Beschichtungsanlage werden die einzelnen Beschichtungslagen der witterungsbeständigen Beschichtung nacheinander aufgetragen, wobei zwischen dem Auftragen der Beschichtungslagen unter Umständen ein Ausgleich der Beschichtungsdicke der zuerst aufgetragenen Beschichtungslage stattfinden kann. Zusätzlich ist auch daran gedacht, zwischen den einzelnen Beschichtungswalzen eine Härtungseinrichtung zum Aushärten der zuerst aufgetragenen Beschichtungslage vorzusehen. Diese Härtungseinrichtung kann beispielsweise UV-Lampen aufweisen. Die Mantellagen der Beschichtungswalzen können beispielsweise aus Polyurethan hergestellt sein. Insgesamt wird mit der erfindungsgemäßen Beschichtungsanlage ein Verfahren ausgeführt, bei dem in einem ersten Schritt auf eine vorzugsweise bereits bedruckte Begrenzungsfläche des Bauelemente ein den zweiten Inhaltsstoff aufweisender Klarlack aufgebracht wird, der 100% UV-Hemmer als zweiten Inhaltsstoff aufweist. Anschließend wird der vorzugsweise UV-aushärtende Lack durch UV-Einstrahlung ausgehärtet. Mit der so erhaltenen zweiten Beschichtungslage werden die Witterungsbeständigkeit und der Erhalt optischer Eigenschaften der bedruckten Bauelementoberfläche sichergestellt. Mit der zweiten Beschichtungswalze wird in einem zweiten Schritt ein zweiter, vorzugsweise klarer, insbesondere UV-aushärtender Lack aufgetragen, mit dem die mechanischen Eigenschaften durch entsprechende Inhaltsstoffe hergestellt werden. Dabei werden im Rahmen der Erfindung vorzugsweise solche Inhaltsstoffe in der ersten (äußeren) Beschichtungslage ersetzt, welche die Kratzfestigkeit verbessern.

## Patentansprüche

1. Bauelement für Witterungseinflüssen ausgesetzte Fassadenbereiche, wie etwa für Türen, Fenster, Tore und/oder feststehende Fassadenbereiche, wobei eine äußere Begrenzungsflächen des Bauelementes mit einer witterungsbeständigen, insbesondere zumindest teilweise transparenten Beschichtung beschichtet ist, wobei eine Fläche des Bauelements mit einer Farbe bedruckt ist und die bedruckte Fläche mit der witterungsbeständigen Beschichtung beschichtet und dadurch geschützt ist, **dadurch gekennzeichnet, dass** die witterungsbeständige Beschichtung mindestens zwei Beschichtungslagen unterschiedlicher Zusammensetzung aufweist und die witterungsbeständige Beschichtung mit einer Gesamtschichtdicke von mehr als 8 µm und weniger als 10 µm aufgetragen ist, wobei vorzugsweise jede Beschichtungslage eine Lagendicke von 2 µm oder mehr aufweist, mindestens eine Beschichtungslage, vorzugsweise eine äußere erste Beschichtungslage einen ersten, die Kratzfestigkeit erhöhenden Inhaltsstoff aufweist, mindestens eine Beschichtungslage, vorzugsweise eine zwischen der ersten Beschichtungslage und der äußeren Begrenzungsfläche des Bauelementes angeordnete innere zweite Beschichtungslage einen zweiten Inhaltsstoff zum Verbessern der Farbbeständigkeit des Bauelements aufweist, der erste Inhaltsstoff eine Siliziumverbindung aufweist, der erste Inhaltsstoff Kieselsäure, Kieselsol, Siliziumdioxid und/oder eine kieselsäurehaltige Substanz enthält, der Anteil der Kieselsäure und/oder des Kieselsols an dem ersten Inhaltsstoff 30-70 Gewichtsprozent beträgt und der zweite Inhaltsstoff einen UV-Absorber aufweist.

2. Bauelement nach Ansprcu 1, **dadurch gekennzeichnet, dass** der Anteil des ersten Inhaltsstoffs an der ersten Beschichtungslage 0,7-22 Gewichtsprozent, insbesondere 3-15 Gewichtsprozent beträgt.

3. Bauelement nach Anspruch 8, **dadurch gekennzeichnet, dass** der Anteil des zweiten Inhaltsstoffs an der zweiten Beschichtungslage 0,5-14,5 Gewichtsprozent, insbesondere 3-10 Gewichtsprozent beträgt.

4. Bauelement nach einem der vorhergehenden Ansprüche, **dadurch gekennzeichnet, dass** mindestens eine Beschichtungslage ein oder mehrere Bindemittel, wie etwa Triacrylat, aliphatisches Triacrylat, Diacrylat, aliphatisches Diacrylat und/oder aliphatisches Urethan-Diacrylat aufweist, deren Anteil an der Belichtungslage insgesamt vorzugsweise zwischen fünf und 76 Gewichtsprozent beträgt.

5. Bauelement nach einem der vorhergehenden Ansprüche, **dadurch gekennzeichnet, dass** die erste Beschichtungslage einen Inhaltsstoff zum Erhalt einer Mattierung der Beschichtung, wie etwa ein Acrylpolymer, insbesondere ein Acrylatestherpolymerisat aufweist, dessen Anteil an der Beschichtung bevorzugt 1,2-23 Gewichtsprozent beträgt.

6. Bauelement nach einem der vorhergehenden Ansprüche, **dadurch gekennzeichnet, dass** das Bauelement ein metallisches Bauelement, insbesondere ein Sektionaltorpane, eine Rolltorlamelle oder dergleichen ist.

7. Bauelement nach einem der vorhergehenden Ansprüche, **dadurch gekennzeichnet, dass** die Farbe in einer Schichtdicke von insgesamt 100 µm oder weniger, vorzugsweise 15 µm oder weniger, besonders bevorzugt 10 µm oder weniger, insbesondere 5 µm oder weniger aufgetragen ist.

8. Bauelement nach einem der vorhergehenden Ansprüche, **dadurch gekennzeichnet, dass** eine Fläche des Bauelementes mit einer Grundbeschichtung beschichtet ist, die mit der Farbe bedruckt und anschließend mit der witterungsbeständigen Beschichtung beschichtet ist.

9. Bauelement nach einem der vorhergehenden Ansprüche, **dadurch gekennzeichnet, dass** die Grundbeschichtung, die Farbe und/oder die witterungsbeständige Beschichtung Pigmente mit einer besonders hohen Reflektivität im Wellenlängenbereich oberhalb von 750 nm aufweist.

10. Bauelement nach einem der vorhergehenden Ansprüche, **dadurch gekennzeichnet, dass** zwischen der beschichteten Oberfläche und einer dieser entgegengesetzten Begrenzungsfläche ein Material geringer Wärmeleitfähigkeit, wie etwa ein PU-Schaum angeordnet ist.

11. Bauelement nach einem der Ansprüche 1 bis 10, hergestellt durch ein Verfahren, bei dem das gegebenenfalls bereits mit einer Grundbeschichtung und/oder einer Farbe bedruckte Bauelement mithilfe einer mindestens zwei Beschichtungswalzen aufweisenden Beschichtungseinrichtung mit der witterungsbeständigen Beschichtung beschichtet wird.

12. Bauelement nach einem der Ansprüche 1 bis 11, hergestellt durch ein Verfahren, bei dem ein Metallband in einem kontinuierlichen Vorgang von einem Vorrat (Coil) abgezogen, einer Bearbeitung, wie etwa Formgebung unterzogen, und danach bedruckt, beschichtet und gegebenenfalls auf vorgegebene Längen geschnitten wird.

13. Bauelement nach einem der Ansprüche 1 bis 12, hergestellt durch Beschichten eines gegebenenfalls mit einer Grundbeschichtung und/oder Farbe und/oder einem Dekor versehenen, insbesondere bedruckten Bauelements mithilfe einer Beschichtungsanlage mit der witterungsbeständigen Beschichtung, wobei die einzelnen Beschichtungslagen mit drehbar gelagerten Beschichtungswalzen der Beschichtungsanlage aufgetragen werden.

14. Bauelement nach Anspruch 13, **dadurch gekennzeichnet, dass** eine Relativbewegung zwischen der äußeren Begrenzungsfläche des Bauelementes und der Beschichtungsanlage erzeugt wird.

## Claims

1. A structural element for facade areas that are exposed to the effects of the weather, such as doors, windows, gates and/or stationary facade areas, wherein an outer delimiting surface of the structural element is coated with a weather-resistant, in particular at least partially transparent coating, and wherein one surface of the structural element is printed with a paint and the printed surface is coated with the weather-resistant coating and protected by said coating, **characterised in that** the weather-resistant coating has at least two coating layers of different compositions and the weather-resistant coating is applied with a total coating thickness greater than 8 µm and less than 10 µm, wherein the thickness of each coating layer is preferably 2 µm or more; at least one coating layer, preferably a first outer coating layer, has a first ingredient for increasing scratch resistance; at least one coating layer, preferably a second inner coating layer situated between the first coating layer and the outer delimiting surface of the structural element, has a second ingredient for improving the colour-fastness of the structural element; the first ingredient contains a silicon compound, the first ingredient contains silicic acid, silica sol, silicon dioxide and/or a substance containing silicic acid, the portion of silicic acid and/or silica sol in the first ingredient being 30-70 weight percent and the second ingredient having a UV absorber.

2. The structural element in accordance with claim 1, **characterised in that** the portion of the first ingredient in the first coating layer is 0.7-22 weight percent, in particular 3-15 weight percent.

3. The structural element in accordance with claim 8, **characterised in that** the portion of the second ingredient in the second coating layer is 0.5-14.5 weight percent, in particular 3-10 weight percent.

4. The structural element in accordance with one of the preceding claims, **characterised in that** at least one coating layer has one or more binders, such as triacrylate, aliphatic triacrylate, diacrylate, aliphatic diacrylate and/or aliphatic urethane diacrylate, the total portion of which in the coating layer is preferably between five and 76 weight percent.

5. The structural element in accordance with one of the preceding claims, **characterised in that** the first coating layer has an ingredient for producing a matting of the coating, such as an acrylic polymer, in particular an acrylate ester polymer, the portion of which in the coating is preferably 1.2-23 weight percent.

6. The structural element in accordance with one of the preceding claims, **characterised in that** the structural element is a metallic structural element, in particular a sectional door panel, a roll-up door slat or similar.

7. The structural element in accordance with one of the preceding claims, **characterised in that** the paint is applied in a coating with a total thickness of 100 µm or less, preferably 15 µm or less, particularly preferably 10 µm or less, and in particular 5 µm or less.

8. The structural element in accordance with one of the preceding claims, **characterised in that** one surface of the structural element is coated with a base coating that is printed with the paint and then coated with the weather-resistant coating.

9. The structural element in accordance with one of the preceding claims, **characterised in that** the base coating, the paint and/or the weather-resistant coating has pigments with a particularly high reflectivity in the wavelength range above 750 nm.

10. The structural element in accordance with one of the preceding claims, **characterised in that** a material with a low thermal conductivity, such as a PU foam, is situated between the coated surface and a delimiting surface which is opposite thereto.

11. The structural element in accordance with one of claims 1 to 10, manufactured by means of a method in which the structural element, where applicable already printed with a base coating and/or a paint, is coated with the weather-resistant coating using a coating device having at least two coating rollers.

12. The structural element in accordance with one of claims 1 to 11, manufactured by means of a method in which a metal strip is drawn from a coil in a continuous process, undergoes machining, such as forming, and is then printed, coated and, where applicable, cut to specified lengths.

13. The structural element in accordance with one of claims 1 to 12, manufactured by coating a structural element, where applicable provided with a base coating and/or paint and/or a pattern and in particular printed therewith, with the weather-resistant coating using a coating system, wherein the individual coating layers are applied with rotatably mounted coating rollers of the coating system.

14. The structural element in accordance with claim 13, **characterised in that** a relative movement is created between the outer delimiting surface of the structural element and the coating system.

## Revendications

1. Élément de construction pour zones de façades exposées aux influences atmosphériques, tel que pour portes, fenêtres, portails et/ou zones de façades fixes, une surface de délimitation extérieure de l'élément de construction étant revêtue d'un revêtement résistant aux intempéries et notamment au moins partiellement transparent, une surface de l'élément de construction étant imprimée à l'aide d'une peinture et la surface imprimée étant revêtue du revêtement résistant aux intempéries et étant ainsi protégée ; **caractérisé en ce que** le revêtement résistant aux intempéries présente au moins deux couches de revêtement de composition différente et le revêtement résistant aux intempéries est appliqué selon une épaisseur de couche globale supérieure à 8 µm et inférieure à 10 µm, chaque couche de revêtement présentant de préférence une épaisseur de 2 µm ou plus ; au moins une couche de revêtement, et de préférence une première couche de revêtement extérieure, présentant un premier composant augmentant la résistance aux éraflures ; au moins une couche de revêtement, et de préférence une deuxième couche de revêtement intérieure située entre la première couche de revêtement et la couche de délimitation extérieure de l'élément de construction, présentant un deuxième composant destiné à améliorer la tenue de la couleur de l'élément de construction ; ledit premier composant présentant un composé à base de silicium ; ledit premier composant contenant de l'acide silicique, du sol de silice, du dioxyde de silicium et/ou une substance contenant de l'acide silicique, la part de l'acide silicique et/ou de sol de silice au sein du premier composant étant de 30 à 70 pour cent en poids et le deuxième composant présentant un absorbeur d'UV.

2. Élément de construction selon la revendication 1, **caractérisé en ce que** la part du premier composant dans la première couche de revêtement est de 0,7 à 22 pour cent en poids, notamment de 3 à 15 pour cent en poids.

3. Élément de construction selon la revendication 8, **caractérisé en ce que** la part du deuxième composant dans la deuxième couche de revêtement est de 0,5 à 14,5 pour cent en poids, notamment de 3 à 10 pour cent en poids.

4. Élément de construction selon l'une des revendications précédentes, **caractérisé en ce qu'**au moins une couche de revêtement présente un ou plusieurs liants, tels que du triacrylate, du triacrylate aliphatique, du diacrylate, du diacrylate aliphatique et/ou du diacrylate d'uréthane aliphatique, dont la part dans la couche de revêtement fait globalement de préférence entre cinq et 76 pour cent en poids.

5. Élément de construction selon l'une des revendications précédentes, **caractérisé en ce que** la première couche de revêtement présente un composant permettant de préserver un matage du revêtement, tel qu'un polymère acrylique, notamment un polymère d'ester d'acrylate, dont la part dans le revêtement fait de préférence de 1,2 à 23 pour cent en poids.

6. Élément de construction selon l'une des revendications précédentes, **caractérisé en ce que** l'élément de construction consiste en un élément de construction métallique, notamment un panneau de porte sectionnelle, une lamelle de porte à enroulement ou similaire.

7. Élément de construction selon l'une des revendications précédentes, **caractérisé en ce que** la peinture est appliquée selon une épaisseur de couche globale de 100 µm ou moins, de préférence de 15 µm ou moins, plus particulièrement de 10 µm ou moins et notamment de 5 µm ou moins.

8. Élément de construction selon l'une des revendications précédentes, **caractérisé en ce qu'**une surface de l'élément de construction est revêtu d'un revêtement de fond qui est imprimé à l'aide de ladite peinture puis est revêtu dudit revêtement résistant aux intempéries.

9. Élément de construction selon l'une des revendications précédentes, **caractérisé en ce que** le revêtement de fond, la peinture et/ou le revêtement résistant aux intempéries présentent des pigments dont le pouvoir réfléchissant dans la gamme des longueurs d'ondes supérieures à 750 nm est particulièrement élevé.

10. Élément de construction selon l'une des revendications précédentes, **caractérisé en ce qu'**un matériau de faible conductivité thermique, tel qu'une mousse de PU, est agencé entre la surface revêtue et une surface de délimitation opposée à celle-ci.

11. Élément de construction selon l'une des revendications 1 à 10, fabriqué selon un procédé dans lequel l'élément de construction, éventuellement préalablement imprimé d'un revêtement de fond et/ou d'une peinture, est revêtu du revêtement résistant aux intempéries à l'aide d'un dispositif de revêtement présentant au moins deux rouleaux de revêtement.

12. Élément de construction selon l'une des revendications 1 à 11, fabriqué selon un procédé dans lequel une bande métallique est dévidée en continu d'un enroulement, est soumise à un usinage, tel qu'une mise en forme, avant d'être imprimée, revêtue et éventuellement coupée à des longueurs prédéfinies.

13. Élément de construction selon l'une des revendications 1 à 12, fabriqué par application, au moyen d'une installation de revêtement, d'un revêtement résistant aux intempéries sur un élément de construction, éventuellement doté d'un revêtement de fond et/ou de peinture et/ou d'un décor qui sont notamment imprimés, lesdites couches de revêtement individuelles étant appliquées par des rouleaux de revêtement rotatifs de l'installation de revêtement.

14. Élément de construction selon la revendication 13, **caractérisé en ce qu'**il est produit un déplacement relatif entre la surface de délimitation extérieure de l'élément de construction et l'installation de revêtement.
